# EUROPÄISCHE PATENTSCHRIFT

(11) **EP 4 108 414 B1**
(45) Veröffentlichungstag und Bekanntmachung des Hinweises auf die Patenterteilung: **07.02.2024**
(21) Anmeldenummer: 22178824.3
(22) Anmeldetag: 14.06.2022
(51) Int. Cl.: B29C 49/22, B29C 49/42, B29C 49/04, B29L 9/00, B29L 23/20, B29L 31/00

(54) **VERFAHREN ZUR HERSTELLUNG EINES BEHÄLTERS**
METHOD FOR PRODUCING A CONTAINER
PROCÉDÉ DE FABRICATION D'UN RÉCIPIENT

(30) Priorität: 23.06.2021 DE 102021116278
(43) Veröffentlichungstag der Anmeldung: 28.12.2022
(73) Patentinhaber: Gaplast GmbH, 82442 Altenau (DE)
(72) Erfinder: Kneer, Roland, 82490 Farchant (DE); Kneer, Stephan, 82490 Farchant (DE); Yilginc, Kasim, 82487 Oberammergau (DE)
(74) Vertreter: Flosdorff, Jürgen

(56) Entgegenhaltungen:
- EP-A1- 2 172 400
- DE-A1- 10 017 443
- DE-A1- 19 626 968
- DE-B4-102006 012 487

## Beschreibung

Die Erfindung betrifft ein Verfahren zur Herstellung eines Behälters, der einen im wesentlichen steifen Außenbehälter und einen leicht verformbaren Innenbeutel enthält, die aus thermoplastischen Kunststoffen bestehen, die keine Schweißverbindung miteinander eingehen, wobei der Behälter eine Behälteröffnung und der Außenbehälter wenigstens eine Wandöffnung hat, durch die ein Druckausgleich in dem Zwischenraum zwischen dem Innenbeutel und dem Außenbehälter erfolgt, wenn sich der Innenbeutel infolge der Abgabe seines Inhalts zusammenzieht. Bei dem Verfahren wird ein aus wenigstens zwei Schichten bestehender Vorformling koextrudiert und zwischen den geöffneten Hälften einer Blasform angeordnet, wobei die Blasform geschlossen wird, wenn der Vorformling die zur Herstellung des Behälters erforderliche Länge hat. Dabei wird Überschußmaterial im Bodenbereich des herzustellenden Behälters abgequetscht und ein nach außen vorstehender Steg aus verschweißtem Material des Außenbehälters ausgebildet, in dem die verschweißte Bodennaht des Innenbeutels eingeklemmt und in axialer Richtung gehalten ist. Danach wird der Vorformling durch ein Druckmedium, im allgemeinen Druckluft, zur Anlage an die Wandung der Blasform aufgeblasen und aus der Blasform entnommen.

Die verschiedenartigen thermoplastischen Kunststoffe des Außenbehälters und des Innenbeutels gehen zwar keine Schweißverbindung miteinander ein, sie haften aber mit beträchtlichen Adhäsionskräften aneinander, wenn der Behälter nach dem oben beschriebenen Verfahren im Koextrusionsverfahren hergestellt wird. Bevor ein derartiger Behälter verwendungsfähig ist, d.h. mit einem flüssigen oder beispielsweise auch gelförmigen Behälterinhalt gefüllt wird, der dann beispielsweise mittels einer Airlesspumpe oder im Falle eines Squeeze-Behälters durch dessen Zusammendrücken allmählich abgegeben wird, muss der Innenbeutel von der Wand des Außenbehälters abgelöst und dann wieder an diese angelegt werden.

Dies kann in der Weise geschehen, dass durch die Behälteröffnung ein Unterdruck auf den Innenbeutel aufgebracht wird, der sich daraufhin schlagartig zusammenzieht. Dabei löst sich der Innenbeutel, der mit seiner Bodennaht in dem Bodensteg des Außenbehälters eingeklemmt ist, mehr oder weniger unkontrolliert von dem Außenbehälter, wobei es auch vorkommen kann, dass sich der Innenbeutel nur an einer Seite ablöst. Anschließend wird durch die Behälteröffnung ein Druckmedium, im allgemeinen Druckluft, in den Innenbeutel eingeführt, um diesen wieder an den Außenbehälter anzulegen, damit der Innenbeutel das vorgesehene Füllvolumen erhalten kann.

Aus der DE 10 2006 012 487 B4 ist ein Verfahren zum Ablösen des Innenbeutels von dem Außenbehälter bekannt, bei dem wenigstens eine Wandöffnung dadurch ausgebildet wird, dass die Wand des Außenbehälters von einem Bohrer oder einer Einstechnadel durchbohrt oder durchstoßen wird, wobei nach vollständiger Durchdringung der Wand des Außenbehälters Druckluft in den Zwischenraum zwischen dem Behälter und dem Innenbeutel eingeführt wird. Hierdurch löst sich der Innenbeutel von der Wand des Außenbehälters, wobei solange Druckluft in den Zwischenraum zwischen dem Innenbeutel und dem Außenbehälter zugeführt wird, bis in dem Innenbeutel bei zuvor abgedichteter Behälteröffnung ein vorbestimmter Druckwert gemessen wird. Auch bei dieser Vorgehensweise ist nicht sichergestellt, dass sich der Innenbeutel an beiden Seiten gleichmäßig von dem Außenbehälter ablöst.

Die DE 100 17 443 A1 offenbart ein Verfahren zum Herstellen eines mit einer Druckausgleichsöffnung versehenen Behälters, bei dem die beim Abquetschen von Überschussmaterial entstehende Bodennaht teilweise abgeschnitten und in den noch 40°C bis 70°C warmen Vorformling eine in Nahtrichtung wirkende Kraft eingeleitet wird, die die Bodennaht aufbricht und plastisch verformt, so dass eine Druckausgleichsöffnung im Bodenbereich ausgebildet wird.

Die DE 196 26 968 A1 offenbart einen im Coextrusionsblasverfahren hergestellten Behälter, bei dem Druckausgleichsöffnungen in dem steifen Außenbehälter beispielsweise durch ein Messer, ein Stanzwerkzeug oder mit einem Laser an Stellen ausgebildet werden, die zu einer durch die Bodenschweißnaht und die Längsmittelachse des Behälters gehende Ebene um etwa 90° versetzt sind.

Die EP 2 172 400 A1 offenbart einen im Blasverfahren hergestellten Doppelbehälter, mit einer äußeren Schicht und einer inneren Schicht aus Kunststoffen, die nicht miteinander verschweißbar sind, wobei die äußere und die innere Schicht infolge unterschiedlicher Schrumpfungsfaktoren der beiden Schichten in einem losgelösten Zustand bleiben.

Wenn der Innenbeutel nicht weitgehend gleichmäßig von der Wand des Außenbehälters abgelöst wurde, tritt trotz Druckausgleichsöffnungen in der Wand des Außenbehälters in dem Innenbeutel als Folge der Abgabe von Füllmaterial ein verhältnismäßig großer Unterdruck auf. Je größer dieser Unterdruck ist, umso größer ist die Permeation durch die sehr dünne Wand des Innenbeutels und die Gefahr, dass dieser undicht wird. Wenn der Unterdruck in dem Innenbeutel zu groß wird, kann dies auch die Funktionsfähigkeit der meist vorgesehenen Pumpe mit sich bringen, so dass nicht der gesamte Behälterinhalt abgegeben werden kann.

Der vorliegenden Erfindung liegt die Aufgabe zugrunde, ein Verfahren anzugeben, bei dem der Innenbeutel gleichmäßiger von dem Außenbehälter abgelöst und wieder an den Außenbehälter angelegt werden kann.

Außerdem soll eine Vorrichtung angegeben werden, mit der dieses Verfahren ausführbar ist.

Diese Aufgaben werden erfindungsgemäß durch die Merkmale der Patentansprüche 1 und 8 gelöst.

Vorteilhafte Ausgestaltungen der Erfindung sind in den abhängigen Ansprüchen gekennzeichnet.

Das erfindungsgemäße Verfahren sieht als ersten Schritt vor, dass ein kleiner Abschnitt des Bodenstegs des Außenbehälters entfernt wird, so dass ein Abschnitt der in den Bodensteg eingeklemmten Bodennaht des Innenbeutels nach außen frei liegt.

Dabei ist bevorzugt, dass der Abschnitt des Bodenstegs weg geschnitten wird, wozu mit besonderem Vorteil ein Hohlmesser verwendet wird. Dieser weg geschnittene Abschnitt sollte sich im mittleren Bereich der Quetschnaht, in deren Längsrichtung gesehen, befinden. Dabei wird der Schnitt quer durch die Quetschnaht und nur so tief ausgeführt, dass der Innenbeutel nicht undicht werden kann.

Der nächste Verfahrensschritt besteht darin, dass der freiliegende Abschnitt der Bodennaht in den Außenbehälter hinein angehoben bzw. gedrückt wird, wodurch eine Öffnung zwischen der Bodennaht des Innenbeutels und dem Außenbehälter entsteht. Es bildet sich hierdurch beidseitig der Bodennaht des Innenbeutels eine Öffnung, in die während des Anhebens der Bodennaht oder im Anschluss daran ein Druckmedium eingeführt wird, das beidseitig des Innenbeutels bis zum Halsbereich des Behälters strömt und dabei den Innenbeutel an beiden Seiten von dem Außenbehälter ablöst.

Als Druckmedium wird vorzugsweise Druckluft verwendet.

Der frei liegende Abschnitt der Bodennaht kann von jedem geeignet geformten Werkzeug angehoben werden, wobei als Werkzeug mit besonderem Vorteil ein stiftförmiger Blasdorn verwendet wird, durch den gleichzeitig das Druckmedium in die Öffnung eingeblasen werden kann.

Bei dem erfindungsgemäßen Verfahren wird der Innenbeutel bei einer minimalen Zyklusdauer komplett an beiden Seiten abgelöst, ohne dass hierbei Schäden wie Weißbruch oder eine nachteilige Faltenbildung am Innenbeutel auftreten.

Der abschließende Schritt des erfindungsgemäßen Verfahrens besteht aus dem an sich bekannten Zuführen eines Druckmediums in die Behälteröffnung, so dass sich der Innenbeutel erneut an den Außenbehälter anlegt, und zwar ohne bleibende Verformung des Innenbeutels beim Ablösen, d.h. ohne Faltenbildung und ohne Lufteinschluss zwischen Innenbeutel und Außenbehälter.

Der Außenbehälter und der Innenbeutel können jeweils aus einem oder mehreren Schichten bestehen, die beim Coextrudieren keine Schweißverbindung miteinander eingehen. Der Außenbehälter enthält häufig eine Sauerstoff-Diffusionsbarriere-schicht. Diese Sauerstoff-Diffusionsbarriere wird bei dem erfindungsgemäßen Verfahren nur an einem einzigen kleinen Teil der Quetschnaht weg geschnitten, wo der Behälter seine höchste Materialdichte hat. Dies hat zur Folge, dass nur eine äußerst geringe Sauerstoffdiffusion in den Innenbeutel stattfindet.

Da nur ein kleiner mittiger Abschnitt der Quetschnaht des Behälters weg geschnitten wird, und dieser Bereich vor allem bei Verwendung durch ein Hohlmesser exakt begrenzt wird, bleibt der Innenbeutel mit seiner verschweißten Bodennaht in den beidseitigen, unverletzten Bereichen des Bodenstegs des Außenbehälters sicher verankert, so dass der Innenbeutel in axialer Richtung in dem Außenbehälter fixiert ist und sich bei Abgabe des Behälterinhalts nur in radialer Richtung zusammenziehen kann.

Das erfindungsgemäße Verfahren wurde an einem flaschenförmigen Behälter mit einem Fassungsvermögen von 12,5 cm³ mit folgenden bevorzugten Daten ausgeführt: In der Mitte der ca. 27 mm langen Quetschnaht wurde mit einem Hohlmesserschnitt in einem einzigen Schnitt, der senkrecht zur Quetschnaht ausgeführt wurde, die Quetschnaht auf einer Länge von ungefähr 4 mm mit einer Schnitt-Tiefe von ungefähr 3 mm weggeschnitten. Das Ablösewerkzeug hatte einen stiftförmigen Blasdorn mit einer Länge von etwa 7 mm, wobei der Dorn ungefähr 2,5 mm eingeführt wurde. Die Luftdruckdüsen am Dorn hatten einen Durchmesser zwischen 0,5 mm und 1,5 mm, je nach Adhäsion des Innenbeutels.

Hierdurch wurde die vollständige, gleichmäßige Ablösung des Innenbeutels von dem Außenbehälter und das erneute glatte Anlegen des Innenbeutels in signifikant verkürzten Arbeitsschritten erreicht.

Bei anderen Flaschentypen ist die abgeschnittene Quetschnahtlänge und die Schnitt-Tiefe entsprechend zu variieren.

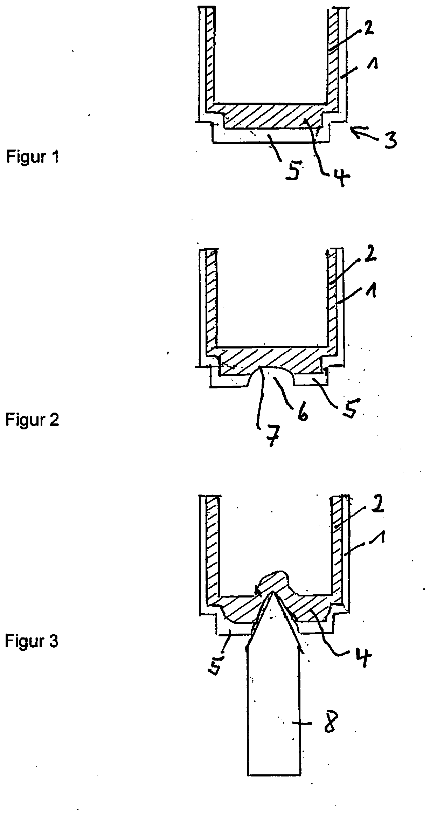

Die Figuren 1 bis 3 zeigen rein schematisch Schritte des erfindungsgemäßen Verfahrens.

Figur 1 zeigt einen mittigen Vertikalschnitt durch einen Behälter, der einen steifen Außenbehälter 1 und einen anliegenden Innenbeutel 2 enthält. Der Vertikalschnitt verläuft in Längsrichtung mittig durch die Bodenquetschnaht 3, bei der die verschweißte Bodennaht 4 des Innenbehälters 2 in dem Bodensteg 5 aus verschweißtem Material des Außenbehälters 1 eingeklemmt ist.

In Figur 2 ist mit einem nicht dargestellten Hohlmesser ein Abschnitt 6 des Bodenstegs 5 weg geschnitten, so dass ein Abschnitt 7 der Bodennaht 4 des Innenbeutels 2 nach außen frei liegt.

Figur 3 zeigt, dass der freiliegende Abschnitt 7 der Bodennaht 4 von einem Dorn 8 in den Behälter hinein angehoben wird, wodurch eine Öffnung zwischen der Bodennaht 4 des Innenbeutels 2 und dem Außenbehälter 1 entsteht, in die Druckluft eingeführt wird, wodurch sich der Innenbeutel 2 von der Innenwand des Außenbehälters 1 an beiden Seiten der Quetschnaht 3 ablöst.

Eine erfindungsgemäße Vorrichtung zur Durchführung des Verfahrens enthält eine Aufnahmeeeinrichtung für die zu bearbeitenden Behälter, eine Schneideeinrichtung mit einem Hohlmesser, das mit einem einzigen Schnitt einen Abschnitt der Quetschnaht des in der Aufnahmeeinrichtung fixierten Behälters entfernt, und eine Ablöseeinrichtung, die einen Ablösestift enthält, der mit einer Druckluftquelle verbunden ist und vorgeschoben wird und dabei die Quetschnaht in den Behälter hinein drückt.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Verfahren zur Herstellung eines Behälters, bestehend aus einem steifen Außenbehälter (1) und einem leicht verformbaren Innenbeutel (2) aus keine Schweißverbindung miteinander eingehenden thermoplastischen Kunststoffen, mit einer Behälteröffnung und wenigstens einer Wandöffnung in dem Außenbehälter, durch die ein Druckausgleich in dem Zwischenraum zwischen dem Innenbeutel (2) und dem Außenbehälter (1) erfolgt, wobei ein aus wenigstens zwei Schläuchen bestehender Vorformling coextrudiert und zwischen den geöffneten Hälften einer Blasform angeordnet wird und die Blasform geschlossen wird, wenn der Vorformling die zur Herstellung des Behälters erforderliche Länge hat, wobei Überschussmaterial im Bodenbereich des herzustellenden Behälters abgequetscht und eine Quetschnaht (3) ausgebildet wird, die einen Bodensteg (5) aus verschweißtem Material des Außenbehälters (1) aufweist, in dem die verschweißte Bodennaht (4) des Innenbeutels (2) eingeklemmt und in axialer Richtung gehalten ist, und der Vorformling durch ein Druckmedium zur Anlage an die Wandung der Blasform aufgeblasen und aus der Blasform entnommen wird,
**gekennzeichnet durch**
folgende Schritte:
a) Entfernen eines Abschnitts (6) des Bodensteges (5) des Außenbehälters (1), so dass ein Abschnitt (7) der Bodennaht (4) des Innenbeutels (2) nach außen frei liegt;
b) Anheben des freiliegenden Abschnitts (7) der Bodennaht (4) in den Außenbehälter hinein, so dass eine Öffnung zwischen der Bodennaht (4) des Innenbeutels (2) und dem Außenbehälter (1) entsteht,
c) Einführen eines Druckmediums in die Öffnung, wodurch sich der Innenbeutel (2) an beiden Seiten von dem Außenbehälter (1) ablöst,
d) Zuführen eines Druckmediums in die Behälteröffnung, so dass sich der Innenbeutel erneut an den Außenbehälter anlegt.

2. Verfahren nach Anspruch 1,
**dadurch gekennzeichnet,**
**dass** der Abschnitt (6) des Bodenstegs (5) weg geschnitten wird.

3. Verfahren nach Anspruch 2,
**dadurch gekennzeichnet,**
**dass** zum Wegschneiden des Abschnitts (6) des Bodenstegs (5) ein Hohlmesser verwendet wird.

4. Verfahren nach einem der Ansprüche 1 bis 3,
**dadurch gekennzeichnet,**
**dass** ein mittiger Abschnitt (6) des Bodenstegs (5) entfernt bzw. weggeschnitten wird.

5. Verfahren nach einem der Ansprüche 1 bis 4,
**dadurch gekennzeichnet,**
**dass** als Druckmedium Druckluft verwendet wird.

6. Verfahren nach einem der Ansprüche 1 bis 5,
**dadurch gekennzeichnet,**
**dass** der freiliegende Abschnitt (7) der Bodennaht (4) von einem Werkzeug (8) angehoben wird.

7. Verfahren nach Anspruch 6,
**dadurch gekennzeichnet,**
**dass** als Werkzeug (8) ein Blasdorn verwendet wird, durch den das Druckmedium in die Öffnung eingeblasen wird.

8. Vorrichtung zur Durchführung des Verfahrens nach einem der Ansprüche 1 bis 7,
**gekennzeichnet durch**
eine Aufnahmeeinrichtung, in der ein zu bearbeitender Behälter fixierbar ist, eine Schneideeinrichtung mit einem vorschiebbar angeordneten Hohlmesser, eine Ablöseeeinrichtung mit einem vorschiebbar gehaltenen Blasdorn, der mit einer Durchluftquelle verbunden ist, und eine Einrichtung zum Zuführen eines Druckmediums in die Behälteröffnung.

## Claims

1. A method of manufacturing a container consisting of a stiff outer container (1) and a readily deformable inner bag (2) of thermoplastic plastic materials which do not form a weld connection with one another, including a container opening and at least one wall opening in the outer container, through which a pressure balance occurs in the gap between the inner bag (2) and the outer container (1), wherein a preform consisting of at least two tubes is coextruded and is arranged between the open halves of a blow mould and the blow mould is closed when the preform has the length necessary for the manufacture of the container, wherein excess material in the base region of the container to be manufactured is squeezed out and a pinch seam (3) is formed, which has a base web (4) of welded material of the outer container, in which the welded base seam (4) of the inner bag (2) is clamped and is held in the axial direction, and the preform is inflated by a pressure medium into engagement with the wall of the blow mould and is removed from the blow mould, **characterised by** the following steps:
a) removing a section (6) of the base web (5) of the outer container (1) so that a section (7) of the base seam (4) of the inner bag is exposed to the exterior;
b) raising the exposed section (7) of the base seam (4) into the outer container so that an opening is produced between the base seam (4) of the inner bag (2) and the outer container (1),
c) introducing a pressure medium into the opening, whereby the inner bag (2) becomes detached on both sides from the outer container (1),
d) supplying a pressure medium into the container opening so that the inner bag again engages the outer container.

2. A method as claimed in Claim 1, **characterised in that** the section (6) of the base web (5) is cut away.

3. A method as claimed in Claim 2, **characterised in that** a circular cutter is used for cutting away the section (6) of the base web (5).

4. A method as claimed in one of Claims 1 to 3, **characterised in that** a central section (6) of the base web (5) is removed or cut away.

5. A method as claimed in one of Claims 1 to 4, **characterised in that** compressed air is used as the pressure medium.

6. A method as claimed in one of Claims 1 to 5, **characterised in that** the exposed section (7) of the base seam (4) is raised by a tool (8).

7. A method as claimed in Claim 6, **characterised in that** a blown mandrel is used as the tool (8), through which the pressure medium is blow into the opening.

8. Apparatus for carrying out the method as claimed in one of Claims 1 to 7, **characterised by** a mounting device, in which a container to be processed may be fixed, a cutting device with a circular cutter arranged to be advanceable, a detaching device with a blow mandrel mounted to be advanceable, which is connected to a source of compressed air, and a device for supplying a pressure medium into the container opening.

## Revendications

1. Procédé de fabrication d'un récipient, se composant d'un récipient extérieur (1) rigide et d'un sachet intérieur (2) légèrement déformable en matières thermoplastiques ne présentant aucune liaison soudée entre elles, avec une ouverture de récipient et au moins une ouverture de paroi dans le récipient extérieur, par laquelle une compensation de pression dans l'espace intermédiaire est effectuée entre le sachet intérieur (2) et le récipient extérieur (1), dans lequel une ébauche se composant d'au moins deux tuyaux est coextrudée et est agencée entre les moitiés ouvertes d'un moule de soufflage et le moule de soufflage est fermé lorsque l'ébauche présente la longueur nécessaire à la fabrication du récipient, dans lequel du matériau excédentaire est écrasé dans la zone de fond du récipient à fabriquer et un cordon d'écrasement (3) est réalisé, lequel présente une nervure de fond (5) en matériau soudé du récipient extérieur (1), dans laquelle le cordon de fond (4) soudé du sachet intérieur (2) est serré et est maintenu dans le sens axial, et l'ébauche est soufflée par un fluide sous pression pour l'appui contre la paroi du moule de soufflage et est retirée du moule de soufflage,
**caractérisé par**
les étapes suivantes :
a) le retrait d'une section (6) de la nervure de fond (5) du récipient extérieur (1) de sorte qu'une section (7) du cordon de fond (4) du sachet intérieur (2) soit libre vers l'extérieur ;
b) le levage de la section (7) libre du cordon de fond (4) dans le récipient extérieur de sorte qu'une ouverture apparaisse entre le cordon de fond (4) du sachet intérieur (2) et le récipient extérieur (1),
c) l'introduction d'un fluide sous pression dans l'ouverture, par quoi le sachet intérieur (2) se détache sur les deux côtés du récipient extérieur (1),
d) la fourniture d'un fluide sous pression dans l'ouverture de récipient de sorte que le sachet intérieur se place de nouveau contre le récipient extérieur.

2. Procédé selon la revendication 1,
**caractérisé en ce que**
la section (6) de la nervure de fond (5) est découpée.

3. Procédé selon la revendication 2,
**caractérisé en ce que**
une lame creuse est utilisée pour la découpe de la section (6) de la nervure de fond (5).

4. Procédé selon l'une quelconque des revendications 1 à 3,
**caractérisé en ce que**
une section (6) médiane de la nervure de fond (5) est retirée ou découpée.

5. Procédé selon l'une quelconque des revendications 1 à 4,
**caractérisé en ce que**
de l'air comprimé est utilisé comme fluide sous pression.

6. Procédé selon l'une quelconque des revendications 1 à 5,
**caractérisé en ce que**
la section (7) libre du cordon de fond (4) est relevée d'un outil (8).

7. Procédé selon la revendication 6,
**caractérisé en ce que**
une épine de soufflage est utilisée comme outil (8), par laquelle le fluide sous pression est insufflé dans l'ouverture.

8. Dispositif de réalisation du procédé selon l'une quelconque des revendications 1 à 7,
**caractérisé par**
un dispositif de réception, dans lequel un récipient à usiner peut être fixé, un dispositif de coupe avec une lame creuse agencée de manière mobile, un dispositif de détachement avec une épine de soufflage maintenue de manière mobile qui est reliée à une source d'air comprimé, et un dispositif de fourniture d'un fluide sous pression dans l'ouverture de récipient.
